# EUROPEAN PATENT APPLICATION

(11) **EP 4 685 821 A1**
(43) Date of publication of application: **28.01.2026**
(21) Application number: 25191260.6
(22) Date of filing: 23.07.2025
(51) Int. Cl.: H01C 1/08, H01C 7/02, H01C 1/14, H01H 85/048, H02H 3/08, H02H 3/20

(54) **PROTECTION DEVICE INCLUDING PTC AND THERMAL DEVICES**

(30) Priority: 26.07.2024 CN 202411017506
(71) Applicant: Littelfuse, Inc., Rosemont, Illinois 60018 (US)
(72) Inventor: Guo, Tao, Rosemont 60018 (US); Poo, TongKiang, Rosemont 60018 (US); Chen, Sky, Rosemont 60018 (US); Wang, Bing, Rosemont 60018 (US)
(74) Representative: Arnold & Siedsma

(57) **Abstract**

The disclosure is directed to protection devices including a positive temperature coefficient (PTC) element having a first main side opposite a second main side, and a thermal device coupled to the PTC element by a conductive material. The thermal device may include a main body, a first heating element coupled to a first side of the main body, and a second heating element coupled to a second side of the main body, wherein the first heating element is directly coupled to the second main side of the PTC element.

## Description

### Field of the Disclosure

The disclosure relates generally to the protection of electrical and electronic circuits and equipment from power surges, faulty circuits, short-circuits, etc. More particularly, the present disclosure relates to a protection device including a positive temperature coefficient (PTC) device coupled with a thermal device.

### Background of the Disclosure

Protecting an electronic circuit from damage due to excessive current or heat is the primary function of many circuit protection technologies. In the past, this protection took the form of a fuse or fusible link. However, in many of today's applications, resettable devices such as Polymeric Positive Temperature Coefficient (PTC) devices, ceramic PTC devices, bimetal breakers, and thermostats are the preferred solution. These devices do not require replacement after a fault event, and allow the circuit to return to the normal operating condition after the power has been removed and/or the overcurrent condition is eliminated. This resettable functionality can help manufacturers reduce warranty, service, and repair costs.

For small motors, such as middle power AC/DC motors used in home appliances, motor stall protection is a concern. Traditional PTC devices are ineffective for protecting against stalling, as the motor stall current is only approximately 3-4x the working current. As a result, traditional PTC devices trip slower under the stall current, leading to the potential for motor damage.

It is with respect to these and other considerations that the present improvements are provided.

### Summary of the Disclosure

This Summary is provided to introduce a selection of concepts in a simplified form that are further described below in the Detailed Description. This Summary is not intended to identify key features or essential features of the claimed subject matter, nor is it intended as an aid in determining the scope of the claimed subject matter.

The present disclosure concerns a protection device may include a positive temperature coefficient (PTC) element including a first main side opposite a second main side, and a thermal device coupled to the PTC element by a conductive material. The thermal device may include a main body, a first heating element coupled to a first side of the main body, and a second heating element coupled to a second side of the main body, wherein the first heating element is directly coupled to the second main side of the PTC element.

The present disclosure concerns a positive temperature coefficient (PTC) device may include a PTC disk comprising a first main side opposite a second main side, and a thermal device coupled to the PTC disk by a conductive material. The thermal device may include a main body, a first heating element coupled to a first side of the main body, and a second heating element coupled to a second side of the main body, wherein the first heating element is directly coupled to the second main side of the PTC disk.

The present disclosure concerns a fast-trip positive temperature coefficient (PTC) device which may include a PTC disk including a first main side opposite a second main side, and a thermal device coupled to the PTC disk by a conductive material. The thermal device may include a main body, and a first heating element coupled to a first side of the main body, wherein the first heating element is arranged in a spiral configuration along the first main side of the body. The thermal device may further include a second heating element coupled to a second side of the main body, wherein the first heating element is directly coupled to the second main side of the PTC disk.

The present disclosure also includes the use of the PTC device for protecting electrical and electronic circuits and equipment from power surges, faulty circuits, short-circuits, etc.

### Brief Description of the Drawings

The accompanying drawings illustrate exemplary approaches of the disclosed embodiments so far devised for the practical application of the principles thereof, and in which:
**FIG. 1** is an end view of a PTC device according to the present disclosure;
**FIG. 2A** is an end view of a thermal device of the PTC device according to the present disclosure;
**FIG. 2B** is a first side view of the thermal device of the PTC device according to the present disclosure;
**FIG. 2C** **is** a second side view of the thermal device of the PTC device according to the present disclosure;
**FIG. 3** is a side view of a thermal element of a thermal device according to the present disclosure; and
**FIG. 4** is an exploded view of the PTC device during assembly according to the present disclosure.

The drawings are not necessarily to scale. The drawings are merely representations, not intended to portray specific parameters of the disclosure. The drawings are intended to depict the disclosure, and therefore should not be considered as limiting in scope. In the drawings, like numbering represents like elements. Furthermore, certain elements in some of the figures may be omitted, or illustrated not-to-scale, for illustrative clarity. Furthermore, for clarity, some reference numbers may be omitted in certain drawings.

### Detailed Description

The present disclosure will now be described more fully hereinafter with reference to the accompanying drawings.

As will be described herein, provided are PTC devices including a PTC disk coupled with a thermal device. The thermal device may include one or more heating elements separated by an insulative body. The heating element may include a spiral-shaped copper element directly secured to a side of the PTC disk by a solder. During use, heat is transferred between the heating elements and the PTC disk to enable accelerated tripping of the PTC device to a higher resistance state.

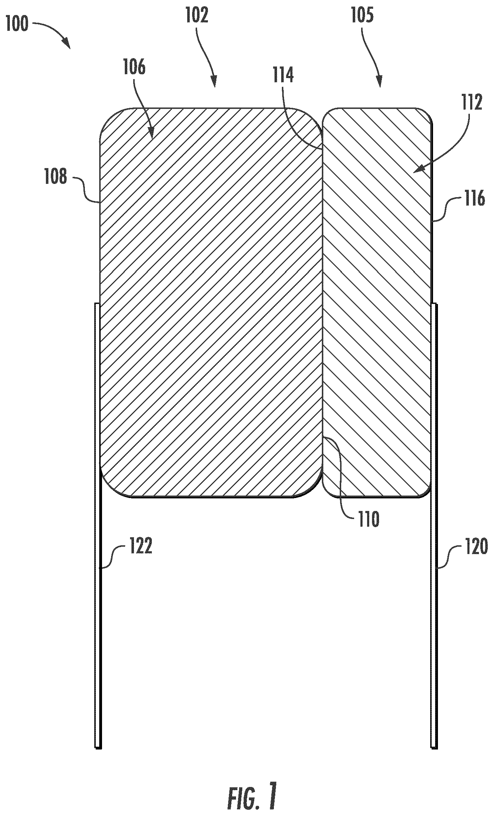

Turning now to **FIG. 1****,** an assembly/device (hereinafter "device") 100 according to the present disclosure will be described. As shown, the device 100 may include a PTC disk (hereinafter "disk") 102 coupled with a thermal device 105. The disk 102 may include a body 106 having a first main side 108 opposite a second main side 110. The body 106 may have a circular or disk shape. It is contemplated that one or more of the disk 102 and the thermal device 105 may have a different shape, such as rectangular, triangular, irregular, etc., without departing from the scope of the present disclosure.

The thermal device 105 may include a body 112 having a first main side 114 opposite a second main side 116. The first main side 114 of the body 112 of the thermal device 105 may be physically and electrically coupled to the second main side 110 of the body 106 of the disk 102. A first terminal 120 (e.g., lead, SMD, or wire) may be connected to the second main side 116 of the body 112 of the thermal device 105, while a second terminal 122 (e.g., lead, SMD, or wire) may be connected to the first main side 108 of the body 106 of the disk 102. Although not shown, each of the first and second terminals 120, 122 may be connected to respective surfaces of the thermal device 105 and the disk 102 by a solder.

The body 106 of the disk 102 may include a top foil layer providing a connection region for the second terminal 122, and a bottom foil layer for connection with the thermal device 105. A layer of PTC material may be sandwiched between the top and bottom layers, in a conventional PTC structural arrangement.

The PTC material of the body 106 of the disk 102 may include a composition of an organic polymer and a particulate conductive filler, e.g., carbon black, or a metal or a conductive metal compound. Such devices are referred to herein as polymer PTC, or PTC resistors, PTC devices and/or PTC elements. Generally, the compositions used in devices of the present disclosure show increases in resistivity that are much greater than those minimum values.

The device 100 can be used in a number of different ways, and may be particularly useful in circuit protection applications, in which the device 100 can function as a remotely resettable device to help protect electrical components from damage caused by excessive currents and/or temperatures. Components which can be protected in this way include consumer electronic components.

When sufficient current passes through a PTC device, it reaches a critical or trip value at which a very large proportion of the heating (and voltage drop) nearly always takes place over a very small proportion of the volume of the device. In order to realize an improved circuit protection device, the overcurrent protection properties of the disk 102 may be combined with the thermal device 105 in an effective way that synergistically realizes full benefit of both elements in the single composite device.

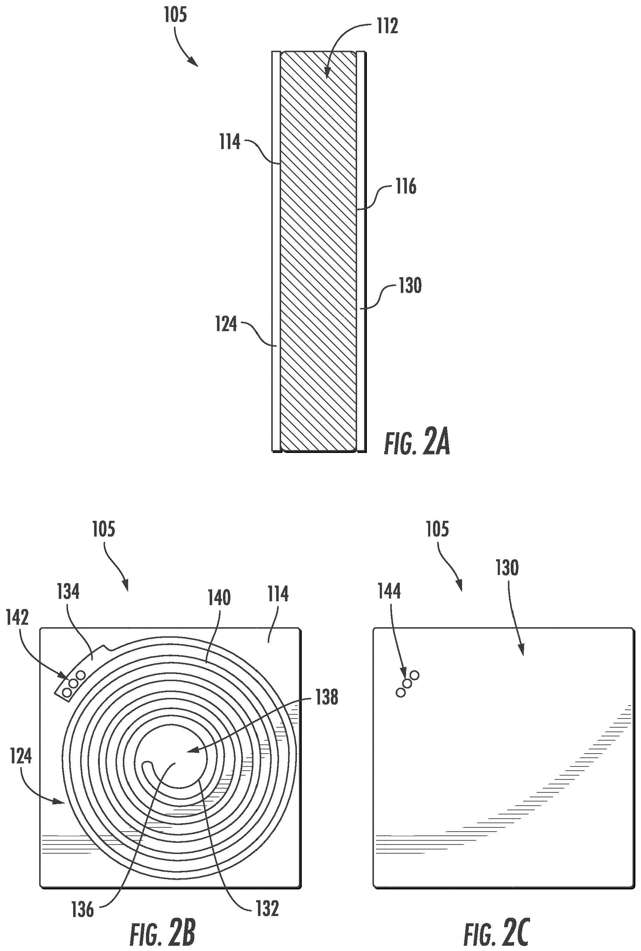

Turning to **FIGs. 2A - 2C****,** the thermal device 105 will be described in greater detail. The thermal device 105 may include a first heating element 124 connected to the first main side 114 of the body 112, and a second heating element 130 connected to the second main side 116 of the body 112. The body 112 of the thermal device 105 may be made from an insulative material to sufficiently separate the first and second heating elements 124, 130 as desired. For example, the body 112 may be a substrate made of prepreg or FR4, ceramic, etc. When assembled with the disk 102, the first heating element 124 may be directly connected to the second main side 110 of the disk 102.

As best shown in **FIG. 2B****,** the first heating element 124 may have a spiral configuration. That is, the first heating element 124 may have a first end 132 and a second end 134, wherein the first end 132 may be formed as a central plate 136. A solder 138 may be formed atop the central plate for connection with the second main side 110 of the disk 102. The first heating element 124 may include a series of concentric rings 140 emanating from the central plate 136 of first end 132. A thickness or width of the second end 134 may be larger than the rest of the first heating element 124 to accommodate a plurality of through holes 142.

As best shown in **FIG. 2C****,** the second heating element 130, which is coupled to the second main side 116 of the thermal device 105, may be a substantially solid plate including a plurality of through holes 144 formed therein. The through holes 144 of the second heating element 130 and the through holes 142 of the first heating element 124 may accommodate one or more components to enable connection between the first and second heating elements 124, 130. The first and second heating elements 124, 130 may be made entirely, or partially, from a conductive material, such as copper. As noted above, the second terminal 120 may be secured directly to the second heating element 130.

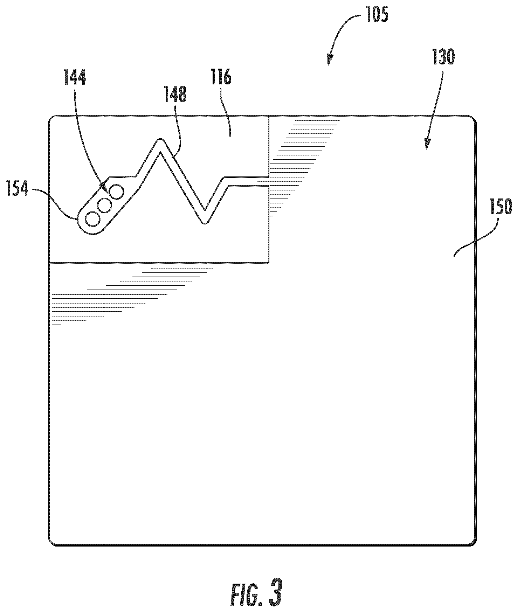

**FIG. 3** demonstrates an alternative second heating element 130. As shown, the second heating element 130 may include a fusible or trace element 148 extending from a main section 150. The trace element 148 may include a free end 154, wherein the through holes 144 are formed at the free end 154. Although non-limiting, the trace element 148 may have a plurality of bent or zig-zagging components. The trace element 148 is thinner than the main section 150 of the second heating element 130, thereby providing a controlled failure point. By providing the trace element 148 as part of the second heating element 130, a fuse on a electrical/circuit board can be eliminated.

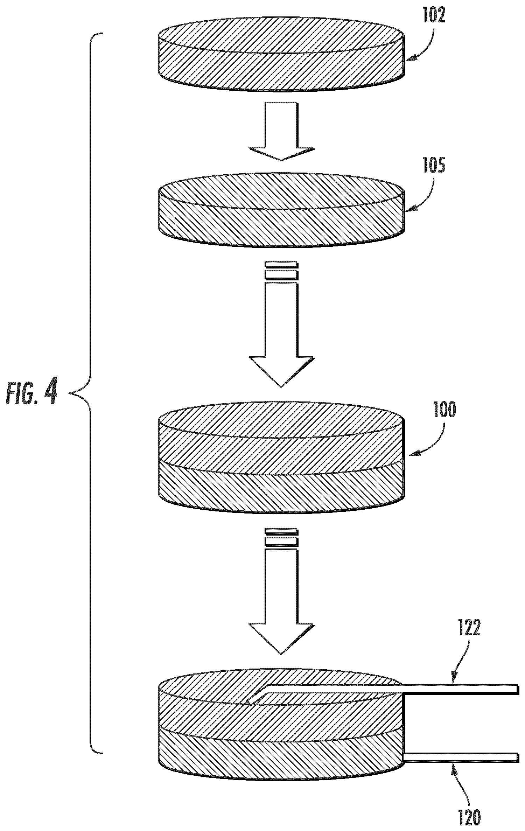

**FIG. 4** demonstrates an approach for forming the device 100 according to the present disclosure. As shown, the disk 102 may be secured to the thermal device 105. The second main side of the disk 102 may be secured to the first main side of the thermal device 105. More specifically, the second main side of the disk 102 may be secured to the first heating element of the thermal device 105, e.g., by a solder. This connection enables transfer of heat between the disk 102 and the thermal device 105.

As further shown, the first and second terminals 120, 122 may then be secured to the device 100. More specifically, the first terminal 120 may be connected to the second main side of the thermal device 105, and the second terminal 122 may be connected to the first main side of the disk 102. The first and second terminals 120, 122 may be connected by a solder, as is known. Although not shown, the device 100 may then be embedded in a component housing made of a flexible material or molding, or a coating or encapsulation, such as an epoxy.

The foregoing discussion has been presented for purposes of illustration and description and is not intended to limit the disclosure to the form or forms disclosed herein. However, it should be understood that various features of the certain aspects, or configurations of the disclosure may be combined in alternate aspects, or configurations.

As used herein, an element or step recited in the singular and proceeded with the word "a" or "an" should be understood as not excluding plural elements or steps, unless such exclusion is explicitly recited.

The use of "including," "comprising," or "having" and variations thereof herein is meant to encompass the items listed thereafter and equivalents thereof as well as additional items. Accordingly, the terms "including," "comprising," or "having" and variations thereof are open-ended expressions and can be used interchangeably herein.

The phrases "at least one", "one or more", and "and/or", as used herein, are open-ended expressions that are both conjunctive and disjunctive in operation. For example, each of the expressions "at least one of A, B and C", "at least one of A, B, or C", "one or more of A, B, and C", "one or more of A, B, or C" and "A, B, and/or C" means A alone, B alone, C alone, A and B together, A and C together, B and C together, or A, B and C together.

All directional references (e.g., proximal, distal, upper, lower, upward, downward, left, right, lateral, longitudinal, front, back, top, bottom, above, below, vertical, horizontal, radial, axial, clockwise, and counterclockwise) are only used for identification purposes to aid the reader's understanding of the present disclosure, and do not create limitations, particularly as to the position, orientation, or use of this disclosure. Connection references (e.g., attached, coupled, connected, and joined) are to be construed broadly and may include intermediate members between a collection of elements and relative movement between elements unless otherwise indicated. As such, connection references do not necessarily infer that two elements are directly connected and in fixed relation to each other.

Furthermore, identification references (e.g., primary, secondary, first, second, third, fourth, etc.) are not intended to connote importance or priority, but are used to distinguish one feature from another. The drawings are for purposes of illustration only and the dimensions, positions, order and relative sizes reflected in the drawings attached hereto may vary.

Furthermore, the terms "substantial" or "substantially," as well as the terms "approximate" or "approximately," can be used interchangeably, and can be described using any relative measures acceptable by one of ordinary skill in the art. For example, these terms can serve as a comparison to a reference parameter, to indicate a deviation capable of providing the intended function. Although non-limiting, the deviation from the reference parameter can be, for example, in an amount of less than 1 %, less than 3%, less than 5%, less than 10%, less than 15%, less than 20%, and so on.

## Claims

1. A protection device, comprising:
a positive temperature coefficient (PTC) element including a first main side opposite a second main side; and
a thermal device coupled to the PTC element by a conductive material, wherein the thermal device comprises:
a main body;
a first heating element coupled to a first side of the main body; and
a second heating element coupled to a second side of the main body, wherein the first heating element is directly coupled to the second main side of the PTC element.

2. The protection device of claim 1, further comprising:
a first terminal coupled to the first main side of the PTC element; and
a second terminal coupled to the second heating element.

3. The protection device of claim 1 or 2, wherein the main body of the thermal device comprises an insulative material.

4. The protection device of any of the preceding claims, wherein the first heating element is coupled to the PTC element by the conductive material

5. The protection device of any of the preceding claims, wherein the conductive material is a solder.

6. The protection device of any of the preceding claims, wherein the first heating element is arranged in a spiral configuration.

7. The protection device of any of the preceding claims, wherein the first heating element has a free end.

8. The protection device of claim 7, wherein the free end comprises a plurality of through holes.

9. The protection device of any of the preceding claims, wherein the first heating element and/or the second heating element are selected from the group consisting of copper, silver, NiP alloy, NiCr alloy or resistance film.

10. The protection device of any of the preceding claims, wherein the second heating element is a substantially solid plate comprising a plurality of through holes.

11. The protection device of any of the preceding claims, wherein the second heating element comprises a fusible trace.

12. The protection device of claim 11, wherein the fusible trace comprises a plurality of through holes.

13. The protection device of any of the preceding claims, wherein the positive temperature coefficient (PTC) element is a disc.

14. The protection device of claim 13, wherein the first heating element is directly coupled to the second main side of the PTC disk.

15. Use of a protection device according to any of the preceding claims for protecting electrical and electronic circuits and equipment from power surges, faulty circuits, short-circuits
